Europäisches Patentamt

European Patent Office

Office européen des brevets

(19)

(11) Veröffentlichungsnummer: **0 199 921**

**A2**

(12) # EUROPÄISCHE PATENTANMELDUNG

(21) Anmeldenummer: **86102227.5**

(22) Anmeldetag: **20.02.86**

(51) Int. Cl.⁴: **C04B 26/04** , **C09D 5/34** , **C09K 3/10**

(30) Priorität: **04.04.85 DE 3512456**

(43) Veröffentlichungstag der Anmeldung:
**10.12.86 Patentblatt 86/45**

(84) Benannte Vertragsstaaten:
**AT BE CH DE LI LU NL**

(71) Anmelder: **PCI Polychemie GmbH**
**Piccardstrasse 10**
**D-8900 Augsburg 1(DE)**

(72) Erfinder: **Besse, Heinz**
**Tournelystrasse 27**
**D-8901 Stadtbergen 2(DE)**

(74) Vertreter: **Eitle, Werner, Dipl.-Ing. et al**
**Hoffmann, Eitle & Partner Patentanwälte**
**Arabellastrasse 4**
**D-8000 München 81(DE)**

(54) **Verformungsfähige Füll- und Fugenmasse und deren Anwendung.**

(57) Es wird eine verformungsfähige Füll-und Fugenmasse mit einem Anteil an Kunststoff und Füllmittel und gegebenenfalls üblichen Hilfsstoffen, insbesondere zum Verfugen von keramischen Fliesen, wobei

(a) der Kunststoff in einer wässrigen Dispersion,

(b) die Füllstoff in einer Teilchengrösse im Bereich von mehr als 60 μm bis 2 mm derart gewählt enthält, dass der Radius des Grösstkorns den Radius des Kleinstkorns um nicht mehr als das Doppelte bei einer zulässigen Abweichung von bis zu ±35 %, übersteigt, und

(c) die Masse in gebrauchsfertiger Formulierung vorliegt,

und deren Anwendung beschrieben.

EP 0 199 921 A2

Verformungsfähige Füll-und Fugenmasse und deren Anwendung

Die Erfindung betrifft eine verformungsfähige Füll-und Fugenmasse mit einem Anteil an Kunststoff und Füllmittel und gegebenenfalls üblichen Hilfsstoffen und deren Anwendung.

Im Bauwesen kommen die verschiedensten Werkstoffe zur Anwendung. Die Anbindung solcher Werkstoffe untereinander oder das Füllen von Rissen, Löchern und Lunkern ist als problematisch bekannt.

Zum Abdichten konstruktiver Fugen, die deutlichen Gesamtformänderungen unterliegen, werden bekanntlich bevorzugt Fugenmassen mit elastischen, elastoplastischen, plastoelastischen oder plastischen -d.h. unterschiedlich rückstellfähigen - Eigenschaften je nach den baulichen Gegebenheiten eingesetzt. Das Verfugen von Flächen aus keramischen Bekleidungsstoffen ohne bzw. mit Dekor erfolgt üblicherweise mit hydraulisch erhärtendem Mörtel oder mit Reaktionsharz-Fugenmörtel. Zum Schliessen von Rissen und Löchern in Putzen, Estrichen, Holzbalken und Paneelen werden hydraulisch erhärtende Mörtel oder Kunstharzmassen verwendet.

An vielen der vorgenannten Stellen werden die Werkstoffe beim Auftreten von Wechselbelastungen, z.B. Längenänderungen bei Temperaturwechseln, mehr oder weniger stark auf Verformung beansprucht. Bei grösseren Verformungen zeigen besonders die starren Fugenmörtel insofern Probleme, als sie diese Belastung nicht aushalten und durch Rissbildung nachgeben. Über derart gebildete Fehlstellen können dann Wasser und Schmutz eindringen und weitere Mängel bewirken.

Bekannt sind z.B. aus der DE-A1 32 33 840 solche Abmischungen von Kunststoffdispersionen oder Zementen mit Füllstoffen. Zur Erzielung hoher Festigkeit und zur Minderung von Schwundrissen werden diese Massen hochgefüllt. Zur Verbesserung der Verarbeitungseigenschaften werden mehlfeine schmierende Füllstoffe, wie Kaoline und ähnliches, eingesetzt. Darüber hinaus versucht man, durch eine stetige, abgestufte Sieblinie bei den Füllstoffen eine feste und dichte Masse zu erhalten.

Hydraulisch erhärtende Mörtel zeigen aber den Nachteil des "Ausblühens", d.h. wasserlösliche Salze aus dem Untergrund oder dem Mörtel selbst werden mit der Feuchtigkeit an die Mörteloberfläche transportiert und kristallisieren beim Verdunsten der Feuchtigkeit dort zu unschönen und störenden Ablagerungen aus. Diese Eigenart hat in der Vergangenheit zu vielen Reklamationen an Mörtelfugen in keramischen Belagsflächen geführt, vor allem da, wo durch eingefärbte Mörtel ein besonderer Farbeffekt erzielt werden sollte. Ein weiterer Mangel solcher hydraulisch erhärtender Mörtel liegt in der ungenügenden Anhaftung an verschiedenen Werkstoffen, wie Holz, Kunststoff, glasierter Keramik und anderem mehr.

In Kenntnis dieser Mängel sind vielfältige Überlegungen angestellt worden, durch Modifizierung der hydraulisch erhärtenden Mörtel mit Kunststoffdispersionen oder durch Anwendung von Kunststoffmassen diese Probleme zu lösen. Während die Plastifizierung von hydraulisch abbindenden Mörteln durch Kunststoffdispersionspulver oder Kunststoffdispersionen an technische Grenzen stösst, zeigt die Anwendung von Kunststoffdispersionen als Alleinbindemittel bisher ein zu hohes Schwundmass und ungenügende Wasserfestigkeit.

Solche Massen, die frei von hydraulisch erhärtenden Bindemitteln sind, werden in der DE-B2 24 37 813 beschrieben. Diese Massen sind neben den angeführten Nachteilen aber auch in der Verarbeitung problematisch, da auf der Baustelle Topfzeiten etc. zu beachten sind.

Der Erfindung liegt die Aufgabe zugrunde, Füll- und Fugenmassen zu schaffen, die die oben beschriebenen Mängel nicht oder weitgehend nicht aufweisen. Insbesondere soll eine Masse entwickelt werden, die sich einfach verarbeiten lässt, auf den verschiedensten Werkstoffen gut haftet, wasserfest, wasserdicht und schwundarm aushärtet, keine Ausblühungen abgibt und Bewegungen über eine Eigenverformung rissfrei aufnehmen kann.

Diese Aufgabe wird durch die Schaffung einer verformungsfähigen Füll-und Fugenmasse der eingangs genannten Art und deren Anwendung gelöst, die dadurch gekennzeichnet ist, dass

(a) der Kunststoff in einer wässrigen Dispersion,

(b) die Füllstoff in einer Teilchengrösse im Bereich von mehr als 60 μm bis 2 mm derart gewählt enthält, dass der Radius des Grösstkorns den Radius des Kleinstkorns um nicht mehr als das Doppelte bei einer zulässigen Abweichung von bis zu ±35 %, übersteigt, und

(c) die Masse in gebrauchsfertiger Formulierung vorliegt.

Die erfindungsgemässen Massen sind auf wässriger Basis formuliert und damit von organischen, flüchtigen Bestandteilen, die bei der Erhärtung der Massen unter Beeinträchtigung des verarbeitenden Personals, abdampfen müssen, im allgemeinen frei. Sie zeichnen sich dadurch aus, dass der inerte Füllstoff in im wesentlichen einheitlicher Teilchengrösse, d.h. unter Vermeidung einer sogenannten "Sieblinie", vorliegt. Insbesondere sind die erfindungsgemässen Füll-und Fugenmassen von besonders feinen Füllstoffen, die unter 60 μm liegen, frei. Je nach der Grösse der zu füllenden Fugen bzw. Löcher, kann das Korn des Füllstoffes im Bereich von 60 μm bis 2 mm gewählt werden. Der in diesem genannten Teilchengrössenbereich liegende Füllstoff soll hinsichtlich der vorliegenden Teilchengrösse nicht vollständig streuen, sondern einheitlich bzw. im wesentlich einheitlich vorliegen. Dies wird dann erreicht, wenn der Radius des Grösstkorns den Radius des Kleinstkorns um nicht mehr als das Doppelte übersteigt. Dabei ist es jedoch, je nach Lage der gewählten Teilchengrösse, innerhalb des Grobbereiches von 60 bis 2.000 μm, d.h. 2 mm, möglich, dass der vom Radius des Grösstkorns und vom Radius des Kleinstkorns eingegrenzte Bereich nach oben bzw. unten Abweichungen von bis zu 35 % und vorzugsweise bis zu 20 % aufweisen kann.

Liegt beispielsweise das gewählte Grösstkorn des Füllstoffs bei 200 μm, so können kleinere Korngrössen bis zu 100 μm, jeweils bezogen auf den Radius, vorliegen. Von diesem gebildeten Bereich sind jedoch Abweichungen bis zu etwa 35 % möglich, so dass bei voller Ausnutzung dieses Bereiches die in diesem Fall gewählte Korngrösse des Füllstoffs sich zwischen 65 und 270 μm bewegt.

Die Füllstoffe werden vorteilhaft in sphäroider Form gewählt. Sie weisen besonders günstig eine Wasserzahl von weniger als 10 auf. Die Methode zur Bestimmung der Wasserzahl ist abgeleitet von der zur Ermittlung der Ölzahl gemäss DIN 53199, wobei anstelle von Öl destilliertes Wasser eingesetzt wird.

Als inerte Füllstoffe können im Rahmen der Erfindung z.B. quarzitische Sande, calcitische Sande aber auch sogenannte Mikroballons etc. eingesetzt werden. Dabei sind die Mikroballons häufig auf silicatischer Grundlage formuliert. Im Rahmen der Erfindung besonders bevorzugte Füllstoffe sind quarzitische Sande, gegebenenfalls in Kombination mit einem Anteil an Mikroballons, vorteilhaft silicatischen Hohlkugeln. Es können jedoch auch andere Füllstoffe eingesetzt werden, die in im wesentlichen sphäroider Form vorliegen, sich unter den Verarbeitungsbedingungen inert verhalten und keine bzw. eine sehr geringe Wasseraufnahme, ausgedrückt in einer Wasserzahl von weniger als 10 und vorzugsweise weniger als 8, aufweisen.

Die Zusammensetzung der Masse kann im Hinblick auf die Hauptbestandteile in breitem Umfang variieren. Im allgemeinen wird sie im Bereich von 10 bis 50 Gew.% Kunststoff, 10 bis 70 Gew.% Füllstoff, sowie 20 bis 80 Gew.% Wasser, bezogen auf die verarbeitungsfähige Masse, liegen. Dabei ist es überraschenderweise möglich, mit besonders niedrigen Kunststoffanteilen Massen mit sehr guten Eigenschaften, die Rissfreiheit, Ausblühsicherheit, verbesserte Anhaftung und andere Eigenschaften bis zu einer Verarbeitungsdicke von 20 mm zeigen, zu formulieren.

Bevorzugte erfindungsgemässe Massen weisen 12 bis 25 Gew.% Kunststoff, 35 bis 70 Gew.% Füllstoff, der vorzugsweise ein Gemisch von quarzitischem Sand mit silicatischen Kugeln darstellen kann, sowie 25 bis 60 Gew.% Wasser auf. Dazu kann die Masse noch geringe Mengen an Hilfsstoffen enthalten, z.B. wasserabweisende Zusätze im Bereich von 0,1 bis 2 Gew.%, sowie Hilfsmittel, wie Netzmittel, Verdicker, Pigmente, im Bereich von 0,5 bis 5 Gew.%. Je nach Wahl von Art und Menge der Hauptbestandteile und insbesondere den Fugenbreiten kann auch die Teilchengrösse der Füllstoffe hierauf abgestimmt werden. Diese liegt besonders vorteilhaft im Bereich von 80 μm bis 1,5 mm und häufig bevorzugt im Bereich von 100 bis 800 μm.

Der in der erfindungsgemässen Masse einsetzbare Kunststoff stellt häufig ein Homo-bzw. Copolymerisat auf Basis von olefinischen-, acrylischen bzw. methacrylischen oder vinylischen Monomeren dar, wobei Homo-bzw. Copolymerisate auch im Gemisch von verschiedenen solcher Monomeren vorliegen können.

In der erfindungsgemässen Masse mit Vorteil einsetzbare Kunststoffe sind Acrylsäureester bzw. Methacrylsäureester mit 4 bis 8 Kohlenstoffatomen in der Estergruppierung, Acrylsäure-Butadien-Mischpolymerisate, sowie Butadien-Styrol-Polymerisate oder Gemische hiervon.

Als Monomere für die in den erfindungsgemässen Massen eingesetzten Kunststoffe können somit unter anderem Styrol, Methacrylsäureester, Acrylsäureester, Butadien, Vinylester, wie Vinylacetat, Vinylpropionat, Vinylbutyrat, Vinylbivalat, Vinyl-2-ethylhexoat, Vinylisononat, Vinylstearat, Vinyllaurat, Vinylversatat, Olefine, vorzugsweise mit 2 bis 4 Kohlenstoffatomen, wie z.B. Ethylen, Propylen, Isobutylen, Vinylhalogenide, wie beispielsweise Vinylchlorid, Vinylidenchlorid, Vinylfluorid, Vinylidenfluorid, Vinylpropionat, zur Herstellung der Homo-bzw. der Copolymerisate und deren Gemischen eingesetzt werden.

Im Rahmen der Erfindung einsetzbare Kunststoffe bzw. Kunststoffdispersionen sind z.B. unter den Handelsbezeichnungen Mowiton M300 - (Farbwerke Hoechst AG; Acrylsäureester), Vinnapas-Dispersion SAF54 (Wacker; Styrol-Acrylsäureester-Copolymerisat), Vinnapas-Dispersion CEF10 (Wacker; Terpolymerisat aus Ethylen, Vinylacetat und Vinylchlorid), Propiofan 325D (BASF; Vinylpropionat-Vinylchlorid-Copolymerisat), Vinnapas-Dispersion EP16 (Wacker; Copolymerisat aus Vinylacetat mit Ethylen), Mowilith DM4 - (Hoechst; Copolymerisat-Dispersion aus Vinylacetat und Maleinsäure-di-n-butylester), Litex 6301 (Hüls; Styrol-Butadien-Dispersion) etc., im Handel.

Die erfindungsgemässe Masse weist mit Vorteil wasserabweisende Zusätze auf. Diese können unterschiedlicher Natur sein, wobei im Rahmen der Erfindung besonders Siliconate, Fettsäureester, Paraffine und ähnliche Wachse, Polyethylene bzw. Polypropylene bzw. deren Gemische bevorzugt sind.

Die erfindungsgemässen Massen werden im Rahmen der vorstehend genannten Mengenbereiche der angeführten Bestandteile mit Vorteil auf eine Viskosität im Bereich von 40.000 bis 140.000 mPas eingestellt. Besonders bevorzugte Viskositäten der erfindungsgemäss formulierten Massen liegen im Bereich von 80.000 bis 130.000 mPas.

Durch die Wahl der Bestandteile und der Teilchengrössen der Füllstoffe aber auch durch den Zusatz entsprechender Hilfsstoffe, wie viskositätsregelnden Substanzen, Wasserabweisern etc., lassen sich die genannten Viskositäten einstellen. Die erfindungsgemässen Massen weisen mit Vorteil eine Verbundfestigkeit, gemessen an keramischen Fliesen, von mehr als 0,8 N/mm², vorzugsweise 1 N/mm² und mehr, auf.

Die erfindungsgemässen Massen sind direkt verarbeitungsfähig und weisen keine nachteiligen Topfzeiten auf. Der Verarbeiter kann die Masse direkt auf der Baustelle dem gelieferten Gefäss entnehmen, ohne dass Verarbeitungszeiten bzw. Topfzeiten einzuhalten sind. Die Masse ist üblicherweise frei von organischen Lösungsmitteln, so dass sich keine störenden Beeinträchtigungen durch deren Abdampfung bei der Verarbeitung ergeben. Durch die Wahl der Füllstoffe in spezieller Konfiguration wird in Kombination mit den anderen erfindungsgemässen Massnahmen Rissfreiheit, aber auch rasche Abbindungsfähigkeit unter Austreten des zugesetzten Wassers erreicht. Das durch das einheitliche Korn mit geringer Oberfläche (Freiheit von Feinstoffen) und geringer Wasserzahl erreichte relativ hohe Gesamtvolumen mit mangelhafter Packungsdichte, erlaubt einerseits eine Senkung des Bindemittelanteils, andererseits aber auch die Abtrocknung von Dispersionswasser selbst bei hoher Schichtdicke. Das so aufgebaute Gerüst ist überraschend schwundarm und rissefrei. Darüber hinaus zeigt sich, begünstigt durch die Zufügung wasserabweisender Zusätze, eine gute Wasserfestigkeit und Wasserdichtigkeit der Masse. Die ausgetrocknete Masse bleibt auch nach 48 Stunden Wasserlagerung völlig hart und nimmt praktisch kein Wasser mehr auf.

Die erfindungsgemässen Massen werden für viele Anwendungszwecke eingesetzt. Eine bevorzugte Anwendung liegt in der Verfugung von Fliesen. Es ist im Rahmen der Erfindung daher auch ein Fugenstrang eingeschlossen, das neben Kunststoff und üblichen Hilfsstoffen den Füllstoff in der speziellen Konfiguration, insbesondere gemäss Anspruch 1 und/oder 2, enthält. Dort ist auf die einheitliche Kornstruktur und die sphäroide Ausbildung des Füllstoffes im Detail eingegangen.

Die erfindungsgemässe Masse kann auf einfache Weise verarbeitet werden. Dabei ist die Anwendung zur Verfugung von keramischen Fliesen besonders bevorzugt, die derart erfolgt, dass die Masse, z.B. mit einer Kelle, über die Fliesen und die dazwischen vorhandenen Hohlräume (Fugen) gestrichen und hiernach die auf den Fliesen selbst vorhandene Masse entfernt wird.

Die erfindungsgemässen Massen, die grundsätzlich auf wässriger Basis formuliert sind, können im Einzelfall auch geringe Anteile an Lösungsmittel enthalten. Als solche kommen Benzine, z.B. eines Siedebereiches von 120 bis 160 °C, Ethylacetat, Butylglykolacetat etc., in Frage. Weitere Hilfsstoffe sind z.B. Weichmacher, beispielsweise Phthalsäureester, Chlorparaffine etc.

Als Netzmittel können, je nach Art der eingesetzten Hauptbestandteile, z.B. Natriumtripolyphosphate, Alkalisalze von Polycarbonsäuren etc., eingesetzt werden.

Als Verdicker, zur Einstellung der gewünschten Viskosität, werden mit Vorteil Alkylcellulosen, Stärken, Bentonite, gegebenenfalls neutralisierte Acrylsäurepolymere etc., eingesetzt.

Die erfindungsgemässen Massen können aus den angeführten Bestandteilen auf einfache Weise, wie dies dem Fachmann an sich bekannt ist, formuliert werden. Typische erfindungsgemässe Zusammensetzungen sind nachstehend angeführt, wobei diese nicht beschränkend sind.

Beispiel 1

ca. 120 Gew.-Teile einer 50 %-igen wässrigen Kunststoffdispersion (Acronal 290 D, BASF)

360 Gew.-Teile Quarzsand der Körnung 0,1 mm

25 Gew.-Teil silicatische Hohlkugeln der Körnung 0,1 mm

15 Gew.-Teile Wasser

10 Gew.-Teile Verdicker, Pigmente, Netzmittel und andere Hilfsstoffe.

Beispiel 2

225 Gew.-Teile einer ca. 50 %-igen wässrigen Kunststoffdispersion, auf Basis eines Mischpolymerisates aus Acryl-Styrol - (Acronal 290 D, BASF)

675 Gew.-Teile Quarzsand der Körnung 0,1 mm (HS I, Fa. Kick)

47 Gew.-Teile silicatische Hohlkugeln der Körnung 110 µm (Typ 150, Fa. Norwegian Talk)

6 Gew.-Teile einer ca. 70 %-igen Lösung von oligomeren anhydrolysierten Silanen - (Silicon 290 L, Wacker)

28 Gew.-Teile Wasser

19 Gew.-Teile Hilfsstoffe, wie z.B. Verdicker, Netzmittel, Pigmente

Beispiel 3

200 Gew.-Teile einer ca. 60 %-igen wässrigen Kunststoffdispersion auf Basis eines Mischpolymerisates von Acryl-Styrol - (Acronal S 400, BASF)

750 Gew.-Teile Quarzsand der Körnung 0,4 mm

10 Gew.-Teile Calciumstearat (Bärlocher)

19 Gew.-Teile Hilfsstoffe, wie z.B. Verdicker, Netzmittel, Pigmente

Beispiel 4

225 Gew.-Teile einer 50 %-igen wässrigen Kunststoffdispersion auf Basis eines Terpolymerisates der Basis Vinylacetat-Ethylen-Vinylchlorid (Vinnapas CEF/10; Wacker)

745 Gew.-Teile Quarzsand der Körnung 0,3 bis 0,7mm

10 Gew.-Teile einer ca. 40 %-igen wässrigen Lösung eines Kaliumsiliconates (Siliconat BS 20; Wacker)

20 Gew.-Teile Hilfsstoffe, z.B. Verdicker, Netzmittel, Pigmente

**Ansprüche**

1. Nach der Aushärtung verformungsfähige Füll- und Fugenmasse mit einem Anteil an Kunststoff und Füllmittel und gegebenenfalls üblichen Hilfsstoffen, insbesondere zum Verfugen von keramischen Fliesen, dadurch **gekennzeichnet**, dass

a) der Kunststoff in einer wässrigen Dispersion,

b) die Füllstoff in einer Teilchengrösse im Bereich von mehr als 60 µm bis 2 mm derart gewählt enthält, dass der Radius des Grösstkorns den Radius des Kleinstkorns um nicht mehr als das Doppelte bei einer zulässigen Abweichung von bis zu ±35 %, übersteigt, und

c) die Masse in gebrauchsfertiger Formulierung vorliegt.

2. Masse nach Anspruch 1, dadurch **gekennzeichnet**, dass der Füllstoff in sphäroider Form vorliegt und eine Wasserzahl von weniger als 10 aufweist.

3. Masse nach Anspruch 1 oder 2, dadurch **gekennzeichnet**, dass der Füllstoff unter quarzitischen Sanden, calcitischen Sanden und/oder silicatischen Hohlkugeln gewählt ist.

4. Masse nach Anspruch 1, 2 oder 3, dadurch **gekennzeichnet**, dass sie

10-50 Gew.% Kunststoff

10-70 Gew.% Füllstoff sowie

20-80 Gew.% Wasser

enthält.

5. Masse nach Anspruch 4, dadurch **gekenn-**

**zeichnet** , dass sie aus

12-25 Gew.% Kunststoff

35-65 Gew.% quarzitischen Sanden

0-5 Gew.% silicatischen Kugeln

0,1-2 Gew.% wasserabweisendem Zusatz

0,5-5 Gew.% Hilfsmittel, wie Netzmittel,

Verdicker, Pigmente, sowie

25-60 Gew.% Wasser

gebildet ist.

6. Masse nach einem oder mehreren der vorhergehenden Ansprüche, dadurch **gekennzeichnet,** dass der Kunststoff unter Homo-bzw. Copolymerisaten bzw. Gemischen hiervon auf Basis von olefinischen-, Acryl-, bzw. Methacryl-und/oder Vinyl-Monomeren ausgewählt ist.

7. Masse nach einem oder mehreren der vorhergehenden Ansprüche, dadurch **gekennzeichnet,** dass der Kunststoff einen (Meth)acrylsäureester mit 4 bis 8 Kohlenstoffatomen in der Estergruppierung, ein Acrylsäureester-Butadien-Mischpolymerisat, ein Butadien-Styrol-Polymerisat oder ein Gemisch hieraus darstellt.

8. Masse nach einem oder mehreren der vorhergehenden Ansprüche, dadurch **gekennzeichnet,** dass der wasserabweisende Zusatz unter Alkylsilanen, Silikonen, Fettsäureestern, Paraffinen und/oder Polyolefinen ausgewählt ist.

9. Masse nach einem oder mehreren der vorhergehenden Ansprüche, dadurch **gekennzeichnet,** dass sie auf eine Viskosität von 40.000 bis 140.000 mPas eingestellt ist.

10. Masse nach einem oder mehreren der vorhergehenden Ansprüche, dadurch **gekennzeichnet,** dass sie von hydraulisch abbindenden Bestandteilen frei ist.

11. Anwendung der Füll-und Fugenmasse zum Verfugen von keramischen Fliesen, wobei die Masse über die Fliesen und die dazwischen vorhandenen Hohlräume (Fugen) gestrichen und hiernach die auf den Fliesen selbst vorhandene Masse entfernt wird.